# EUROPÄISCHE PATENTSCHRIFT

(11) **EP 3 004 666 B1**
(45) Veröffentlichungstag und Bekanntmachung des Hinweises auf die Patenterteilung: **13.11.2019**
(21) Anmeldenummer: 14730764.9
(22) Anmeldetag: 23.05.2014
(51) Int. Cl.: F16B 25/00, F16B 25/10

(54) **SCHRAUBE**
SCREW
VIS

(30) Priorität: 30.05.2013 TW 102210076
(43) Veröffentlichungstag der Anmeldung: 13.04.2016
(73) Patentinhaber: Avvio GmbH & Co Kg, 8055 Graz (AT)
(72) Erfinder: HUBMANN, Gerhard, 8042 Graz (AT)
(74) Vertreter: Schwarz & Partner Patentanwälte OG
(86) Internationale Anmeldenummer: PCT/EP2014/060633
(87) Internationale Veröffentlichungsnummer: WO 2014/191310

(56) Entgegenhaltungen:
- EP-A1- 0 705 987
- EP-A1- 2 458 233
- WO-A1-2007/073326
- DE-A1- 19 860 085
- DE-A1-102007 024 240
- JP-A- 2010 190 269
- US-A1- 2003 021 653

## Beschreibung

Die Erfindung betrifft eine Schraube, insbesondere eine Holzschraube, mit den Merkmalen des Oberbegriffs von Anspruch 1.

Allgemein dienen Schrauben, insbesondere Holzschrauben, zur Befestigung von mindestens zwei Bauteilen, welche Bauteile beispielsweise aus Holz oder aus einem holzähnlichen Material bestehen. Holzschrauben werden vorwiegend in Holzbauteilen eingeschraubt, worin sie sich selbst ein entsprechendes Gegengewinde schneiden. Ein komplementäres Gegenstück wie beispielsweise eine Mutter mit einem innenliegenden Gegengewinde, die üblicherweise zum Sichern von Metallschrauben erforderlich ist, existiert bei Holzschrauben nicht. Derartige Holzschrauben weisen üblicherweise einen zylinderförmigen Schraubenschaft mit einer kegelförmigen Spitze an ihrem einen Schaftende bzw. Schraubenende sowie einen Schraubenkopf bzw. Antriebskopf an ihrem gegenüberliegenden Schaftende auf. Ein wendelförmiges Schraubengewinde, welches auf einen Gewindekern bzw. auf einen Schraubengrundkörper gewickelt ist, kann - je nach Verwendungszweck - als Vollgewinde oder als Teilgewinde produziert werden und läuft üblicherweise jeweils zur Schraubenspitze hin aus. Im Falle eines Teilgewindes wird zwischen dem glatten Schraubenschaft ohne Gewinde und dem Gewindekern im Bereich des Gewindeabschnitts unterschieden. Der glatte Schraubenschaft ist dabei üblicherweise zwischen dem Gewindeabschnitt und dem Schraubenkopf angeordnet, wobei ein Durchmesser des Schraubenschafts meist größer ist als ein Durchmesser des Gewindekerns. Bei Vollgewindeschrauben reicht der Gewindeabschnitt von der Schraubenspitze bis zum Schraubenkopf, weshalb in diesem Fall der Schraubenschaft der Gewindekern ist und somit der Durchmesser des Schraubenschafts auch dem Durchmesser des Gewindekerns entspricht.

Derartige Holzschrauben - oftmals auch als Spanplattenschrauben bezeichnet - werden mit ihrer Spitze voran in ein mehr oder weniger weiches Material, beispielsweise in Bauteile aus Holz oder aus einem holzähnlichen Material, manuell oder maschinell verschraubt. Beim Verschrauben wird dabei das Material des Bauteils - anders als beim Bohren - von der Holzschraube verdrängt. Eine in einem Bauwerk eingeschraubte Holzschraube muss als Verbindungsteil zwischen benachbarten, miteinander verschraubten Bauteilen unterschiedliche Krafteinflüsse aufnehmen bzw. weiterleiten oder ableiten können. Diese Krafteinflüsse können je nach Anwendungsfall Zug-, Druck- und/oder Biegekräfte sein. Wesentlich bei einer verschraubten Holzschraube ist dabei eine sogenannte Gewindeauszugskraft bzw. Herausziehtragfähigkeit, also jene Haltekraft, die von dem im Bauteil eingeschraubten Schraubengewinde zur Verbindung der miteinander verschraubten Bauteile zur Verfügung gestellt wird.

Durch das verdrängte Material entsteht beim Einschrauben ein Druck, welcher sowohl auf die eingeschraubte Schraube, als auch innerhalb des Bauteilmaterials wirkt. Dieser Druck kann nachteilig dazu führen, dass einerseits aufgrund einer Spaltwirkung der eingeschraubten Schraube beim Einschrauben der Bauteil gesprengt bzw. zerstört wird. Andererseits wird durch den im Bauteil wirkenden Druck ein erhöhter Kraftaufwand bzw. ein erhöhtes Einschraubdrehmoment zum Verschrauben der Schraube notwendig. Ist der Einschraubwiderstand bzw. das Einschraubdrehmoment zu groß, kann nachteilig die Schraube während des Einschraubens in den Bauteil abgedreht werden. Weshalb in diesem Fall die Schraube innerhalb des Bauteils keine Kräfte mehr aufnehmen bzw. weiterleiten kann. Für die Weiterentwicklung von Schrauben, insbesondere von Holzschrauben, sind daher die folgenden Parameter besonders relevant:
- Verringerung des Einschraubwiderstands bzw. Einschraubdrehmoments:
   Eine Verringerung des Einschraubwiderstandes bzw. eine Verringerung des zum Einschrauben erforderlichen Einschraubdrehmoments ist gewünscht, weil dadurch eine leichtere, weniger kraftraubende Verschraubung durch einen Anwender möglich wird, weshalb sich weiters auch das Verletzungs- und Unfallrisiko beim Einschrauben verringern lassen. Außerdem werden aufgrund eines geringeren Kraft- und Energieaufwands auch der erforderliche Wartungs- und Kostenaufwand von Einschraubgeräten wie beispielsweise von Akku-Schraubern reduziert.
- Erhöhung der Gewindeauszugskraft bzw. Herausziehtragfähigkeit:
   Eine Erhöhung der Haltekraft des Schraubengewindes im Bauteil bzw. der Herausziehtragfähigkeit einer Holzschraube ist deshalb gewünscht, da bei Befestigungen mit mehreren Holzschrauben aufgrund einer erhöhten Haltekraft jeder einzelnen Schraube eine geringere Gesamtanzahl von Verbindungsmitteln erforderlich ist. Somit können insgesamt weniger Verbindungsmittel zur Lösung derselben Befestigungsaufgabe verwendet werden, wodurch auch die Materialressourcen und Kosten nachhaltig reduziert werden können. Umgekehrt kommt es bei einem Einsatz von derselben Anzahl an Verbindungsmitteln mit einer im Vergleich zu herkömmlichen Schrauben jeweils erhöhten Haltekraft je Schraube insgesamt zu einer höherwertigen Lösung einer bestimmten Befestigungsaufgabe und damit vorteilhaft zu höheren Sicherheiten im konstruktiven Holzbau.
- Verringerung der Spaltwirkung auf den Bauteil beim Einschrauben:
   Eine Verringerung der Spaltwirkung während des Einschraubens auf das Material des Bauteils ist deshalb gewünscht, weil nur in einem im Wesentlichen rissfreien Bauteil entsprechend hohe Haltekräfte der Verschraubung gewährleistet sind und nur bei weitestgehend rissfreier Montage ein möglichst geringer Verschleiß von Holzbauteilen erzielt wird.

Aus dem Stand der Technik sind dazu unterschiedliche Ausführungen an Holzschrauben bekannt, bei denen jeweils versucht wird, zumindest einen der drei vorgenannten Parameter - verringerter Einschraubwiderstand sowie verringerte Spaltwirkung bei erhöhter Gewindeauszugskraft - möglichst positiv zu beeinflussen.

Um den Druck beim Einschrauben innerhalb des Bauteils zu minimieren und damit den Einschraubwiderstand so gering wie möglich zu halten, werden herkömmliche Holzschrauben beispielsweise mit einer synthetischen Gleitbeschichtung versehen. Dies erhöht jedoch nachteilig die Herstellungskosten und belastet die Umwelt. Weiters sind aus dem Stand der Technik Holzschrauben bekannt, bei denen sich ein Reibeteil bzw. ein sogenannter Ausreiber am Ende des Gewindes im Übergangsbereich zum glatten Schaftteil einer Schraube befindet. Die Wirkung und Funktion eines solchen Reibeteiles ist es, einen größeren Lochdurchmesser im Material des Bauteils herzustellen, als dem Durchmesser des Schraubenschaftes im Holz entspricht, sodass beim Einschrauben die Reibung am danach folgenden, glatten Schraubenschaft verringert wird.

Des Weiteren gibt es bei den am Markt erhältlichen Holzschrauben unterschiedliche geometrische Ausführungen der Schraubenspitzen, die jeweils eine zumindest vergleichbare Funktionsweise wie das vorgenannte Reibeteil haben, wobei allerdings das Reibeteil bereits an der Schraubenspitze und nicht erst in Einschraubrichtung gesehen weiter hinten im Übergangsbereich vom Gewindeteil zum glatten Schraubenschaftteil angeordnet ist. Je nach Ausführungsweise bzw. abhängig vom jeweiligen Produzenten werden derartige Reibeteile im Bereich der Schraubenspitze auch als sogenannte Ausreiber, Gewinderinge, Gegengewinde, Mitnehmergewinde oder auch als Schaftrippen, Bohrspitzen bzw. als Schabenuten bezeichnet. Diesen an der Schraubenspitze angeordneten Reibeteilen ist gemeinsam, dass bereits beim Einschrauben an der Spitze der Schraube beginnend ein vergrößerter Lochdurchmesser im Bauteil erzielt wird, weshalb der in Einschraubrichtung nachfolgende Kerndurchmesser des Schraubenschafts, auf dem das Gewinde der Schraube aufgebracht ist, einer verringerten Reibwirkung ausgesetzt ist. Eine Schraube mit Reibeteilen bzw. Schabeteilen ist zum Beispiel aus der Druckschrift DE 10 2007 024 240 A1 oder der Druckschrift US 2003/0021653 A1 bekannt. Nachteilig an derartigen Ausführungen ist jedoch, dass aufgrund des vergrößerten Lochdurchmessers im Bauteilmaterial die Gewindeauszugskraft bzw. Herausziehtragfähigkeit und somit die Haltekraft des Schraubengewindes im Bauteil verringert werden.

Die Herausziehtragfähigkeit betreffend wird die Haltekraft des Gewindes im Bauteil bei den am Markt erhältlichen Produkten vorwiegend über die Gewindesteigung bestimmt. So sind derzeit am Markt beispielsweise Holzschrauben erhältlich, welche ein sogenanntes High-Low-Gewinde (auch als Hi-Lo-Gewinde bezeichnet) aufweisen, das eine Erhöhung der Haltekraft bewirken soll. Eine derartige Holzschraube ist beispielsweise aus dem Dokument AT 412665 B bekannt. Diese Holzschraube weist eine sogenannte Verdichterspitze auf, wobei zwischen den Gewindegängen im Bereich der Spitze Querrippen eingefügt werden. Diese Querrippen sollen beim Eindrehen der Schraube das Material durch Verdrängung verdichten und somit die Reibung beim Einschrauben verringern. Diesbezüglich sind auch Schrauben bekannt, die gegenläufig zum Schraubengewinde mehrere zusätzliche Gewindegänge aufweisen, oder diametral angeordnete Erhebungen bzw. Längsstege aufweisen, die an der Mantelfläche des Gewindekerns angeordnet sind und einander in Längsachsenrichtung überlappen. So eine Schraube ist zum Beispiel aus der Druckschrift EP 2 458 233 A1, WO 2007/073326 A1, EP 0 705 987 A1 oder JP 2010-190269 A bekannt. Durch die zusätzlichen Gewindegängen bzw. die Anordnung der Erhebungen bzw. Längsstege am Gewindekern wird nachteilig die Auszugskraft der eingeschraubten Schraube verringert, da sich aufgrund der zusätzlichen gegenläufig zum Schraubengewinde verlaufenden Gewindegänge oder Längsstege bzw. Erhebungen eine Erhöhung des Gewindekerndurchmessers ergibt, was zu einem größeren Lochdurchmesser im zu verschraubenden Gegenstand und daher zu einer geringeren resultierenden Gewindetiefe führt.

Weiters wird mit entsprechenden Maßnahmen im Bereich der Schraubenspitze versucht, eine verringerte Spaltwirkung von Holzschrauben beim Einschrauben im Bauteil zu erzielen und dabei das Material des Bauteils beim Einschrauben möglichst nicht zu schädigen bzw. zu zerstören. Dazu sind aus dem Stand der Technik sogenannte Ausreiber, Gewinderinge, Gegengewinde, Mitnehmergewinde oder auch Schaftrippen bzw. Bohrspitzen bekannt, wobei von Herstellerseite jeweils darauf geachtet wird, dass ein Gewindegang jeweils exakt bis zur Spitze gewalzt ist. Weiters sind Holzschrauben bekannt, bei denen ein sogenannter Wellenschliff am Schraubengewinde im Bereich der Schraubenspitze aufgebracht ist, wodurch die unerwünschte Spaltwirkung beim Einschrauben in das Bauteilmaterial verringert werden soll. Nachteilig an diesen genannten Maßnahmen ist zumindest, dass sie in der Herstellung aufwendig sind. Da die vorgenannten Verbesserungsvorschläge, nämlich das Schraubengewinde im Bereich der Schraubenspitze besonders exakt zu fertigen bzw. dieses mit einem zusätzlichen Wellenschliff auszustatten, keine Änderungen am grundlegenden Aufbau von an sich bekannten Holzschrauben bedeuten, ist auch die Auswirkung dieser vorgeschlagenen Maßnahmen eher gering, weshalb bei Verwendung derartiger Holzschrauben dennoch Bauteilschädigungen auftreten können.

Es ist somit Aufgabe der vorliegenden Erfindung eine Schraube, insbesondere eine Holzschraube, bereitzustellen, die die geschilderten Nachteile des Stands der Technik vermeidet, welche ohne Vorbohren in Bauteilen, vorzugsweise in Bauteilen aus Holz oder einem holzähnlichen Material, verwendet werden kann, und welche jeweils im Vergleich zu herkömmlichen Holzschrauben einen verringerten Einschraubwiderstand bzw. eine verringerte Spaltwirkung beim Einschrauben in die jeweiligen Bauteile hat sowie eine erhöhte Herausziehtragfähigkeit in eingeschraubter Lage aufweist.

Diese Aufgaben werden bei einer Schraube, insbesondere einer Holzschraube, gemäß dem Oberbegriff des Anspruchs 1 mit den Merkmalen des kennzeichnenden Teiles von Anspruch 1 gelöst. Die Unteransprüche betreffen weitere besonders vorteilhafte Ausgestaltungen der Erfindung.

Bei einer erfindungsgemäßen Holzschraube, umfassend einen zylinderförmigen Schraubenschaft, an dessen einem Ende ein Spitzekonus ausgebildet ist, einen Schraubenkopf, der an dem anderen Ende des Schraubenschafts ausgebildet ist, sowie zumindest einen Gewindeabschnitt mit einem Gewindekern, welcher Gewindeabschnitt sich vom Spitzekonus in Längsachsenrichtung entlang in Richtung zum Schraubenkopf erstreckt, wobei an dem zumindest einen Gewindeabschnitt mehrere aufeinanderfolgende Gewindeumdrehungen ausgebildet sind, sind im Bereich des zumindest einen Gewindeabschnitts außenseitig an der Mantelfläche des Gewindekerns mehrere Erhebungen angeordnet.

Die Erhebungen umfassen erste in Längsachsenrichtung voneinander beabstandete Erhebungen und zweite in Längsachsenrichtung voneinander beabstandete Erhebungen, wobei die ersten Erhebungen in einer ersten geraden Reihe an der Mantelfläche des Gewindekerns angeordnet sind und die zweiten Erhebungen in einer zweiten geraden Reihe an der Mantelfläche des Gewindekerns angeordnet sind. Die ersten Erhebungen sind zwischen benachbarten Gewindeumdrehungen angeordnet und mit jeweils einer Flanke der benachbarten Gewindeumdrehungen verbunden. Ferner sind die ersten Erhebungen alternierend mit den zweiten Erhebungen angeordnet. Die zweiten Erhebungen sind jeweils an einer Gewindeumdrehung des Gewindeabschnitts angeformt und bilden beiderseits dieser Gewindeumdrehung Vorsprünge.

Die erfindungsgemäße Anordnung der Erhebungen an der Mantelfläche des Gewindekerns im Bereich des zumindest einen Gewindeabschnitts dient dazu, dass wenn die Schraube in den Bauteil eingesetzt und eingesenkt ist, das innere Material des Bauteils sowohl von dem Gewindeabschnitt bzw. dem Schraubenschaft als auch von den über die Mantelfläche des Gewindekerns bzw. über einen Kerndurchmesser des Gewindeabschnitts vorstehenden Erhebungen bzw. Vorsprüngen verschoben und angedrückt werden. Die Erhebungen drücken dabei von der Längsachse der Schraube aus gesehen das angrenzende Material des Bauteils im Wesentlichen radial nach außen. Dadurch wird eine Sicherungsfunktion gegen Herausdrehen der Schraube hergestellt und die Herausziehtragfähigkeit verbessert, nachdem die Schraube in den Bauteil eingeschraubt ist. Aufgrund der Sicherungsfunktion der Vorsprünge an der Mantelfläche des Gewindekerns der Schraube gegenüber dem Bauteil kann sich die Schraube in dem Bauteil nicht leicht lockern, auch wenn Kräfte von außen auf den Bauteil mit der Schraube einwirken.

Die Erfindung zeichnet sich weiters dadurch aus, dass beim Einschrauben der Schraube der Gewindekern im Bereich der Erhebungen jeweils seitlich - also in radialer Richtung in Bezug zur Längsachsenrichtung - alternierend versetzt wird, sodass die zur Reibung führenden Kontaktflächen der Schraube mit dem Bauteilmaterial während der Verschraubung deutlich - bis zur Hälfte der bei Schrauben derzeit üblichen Kontaktflächen - reduziert werden. Wie nachfolgend belegt wird, kann bei einer erfindungsgemäßen Schraube aufgrund der dynamischen Verschraubung, welche durch den versetzten Kerndurchmesser während der Drehbewegung der Schraube erzielt wird, das erforderliche Einschraubdrehmoment beispielsweise um bis zu 50% des sonst bei aus dem Stand der Technik bekannten, vergleichbaren Schrauben erforderlichen Einschraubdrehmoments reduziert werden.

Durch entsprechend geeignete Anordnung der Erhebungen an der Mantelfläche des Gewindekerns bzw. am Kerndurchmesser werden höhere Haltekräfte erzielt, welche im Vergleich zu derzeit bekannten Schrauben zu einer um bis zu 30% erhöhten Herausziehtragfähigkeit bzw. Haltekraft des Schraubengewindes im Bauteil führen. Aufgrund der dynamischen Verschraubung, welche durch den versetzten Kerndurchmesser in der Drehbewegung erzielt wird, werden die Holzfasern beim Einschrauben nahezu unverletzt und können sich nach Beendigung des Einschraubvorgangs an den mit Erhebungen versehenen, versetzten Kerndurchmesser des Gewindekerns der eingeschraubten Schraube zurückanschmiegen. Dadurch kommt es zu einer förmlichen Verzahnung bzw. zu einer formschlüssigen Verbindung zwischen der eingeschraubten Schraube und dem diese umgebenden Bauteil, welche zu einer Steigerung der Ausziehkraft führt.

Als weiterer Vorteil ist eine signifikant verringerte Spaltwirkung des Bauteilmaterials beim Einschrauben einer erfindungsgemäßen Schraube zu nennen, die bei Vorversuchen im Vergleich mit herkömmlichen vergleichbaren Schrauben gemessen wurde. Aufgrund der dynamischen Verschraubung, welche bei einer erfindungsgemäßen Schraube durch die Erhebungen bzw. durch den versetzten Kerndurchmesser in der Drehbewegung erzielt wird, ist die Verdrängungskraft geringer und die im Baumaterial beim Einschrauben entstehenden Spannungen führen zu geringerem Aufspalten bzw. zu weniger Rissen im Material des Bauteils.

Die Erfindung ist dabei weder auf bestimmte Schraubendimensionen wie beispielsweise Schraubenlängen, nominale Schraubendurchmesser, und/oder auf bestimmte Ausführungsvarianten des Spitzekonus, des Schraubenkopfs, von Mitnahmeprofilen am Schraubenkopf und/oder von Gewindesteigungen beschränkt. Ebenso sind von der Erfindung sowohl Schrauben mit einem oder mit mehreren Gewindeabschnitten sowie mit einem Teilgewinde und/oder einem Vollgewinde umfasst.

Auch die Gestaltung der Erhebungen im Bereich des zumindest einen Gewindeabschnitts kann individuell an unterschiedliche Anwendungsfälle der Schrauben angepasst werden. Die Erhebungen an der Mantelfläche des Gewindekerns können beispielsweise gleiche oder unterschiedliche Konturen ihrer Außenflächen aufweisen. Vorteilhaft bilden die Außenflächen der Erhebungen eine kurvenförmige Kontur, um beim Einschrauben im Einschraubloch das Material des Bauteils möglichst wenig zu verletzen. Ebenso ist es im Rahmen der Erfindung möglich, Erhebungen an der Mantelfläche des Gewindekerns vorzusehen, welche zumindest abschnittsweise eine zackenförmige, stufenförmige, gewellte und/oder Sägezahnförmige bzw. dreieckförmig abgesetzte Kontur ihrer Außenflächen aufweisen. Die Zacken, Stufen, Wellen und/oder Sägezahnförmigen Konturverläufe können an den Außenflächen der Erhebungen parallel zur Längsachsenrichtung oder aber in einem Winkel schräg zur Längsachsenrichtung der Schrauben angeordnet sein.

Bei einer Schraube mit einem Teilgewinde wird zwischen einem oder mehreren Gewindeabschnitten jeweils mit einem Gewindekern sowie einem oder mehreren Abschnitten des glatten Schraubenschafts ohne Gewinde unterschieden. Ein Kerndurchmesser des Gewindekerns ist dabei üblicherweise kleiner als ein Schaftdurchmesser des glatten Schraubenschafts. Im Falle einer Schraube mit einem Vollgewinde reicht der Gewindeabschnitt entlang der gesamten Längsachse der Schraube vom Spitzkonus bis zum Schraubenkopf, weshalb der Gewindekern der Schraubenschaft ist. Der Kerndurchmesser des Gewindekerns wird in diesem Fall bei einer Vollgewindeschraube im Gewindeabschnitt zum Schaftdurchmesser des Schraubenschafts.

Bei einer erfindungsgemäßen Holzschraube sind die Erhebungen an der Mantelfläche des Gewindekerns in Längsachsenrichtung voneinander beabstandet angeordnet. Hier ist von Vorteil, dass die einzelnen Erhebungen beim Einschrauben in einem Bauteilmaterial jeweils lokal zu einem erhöhten Druck auf das Bauteilmaterial führen, wobei sich aufgrund der Abstände zwischen benachbarten Erhebungen die Holzfasern nach Beendigung des Einschraubvorgangs besonders wirkungsvoll an die Bereiche des Kerndurchmessers bzw. des Gewindekerns zwischen den Erhebungen zurückanschmiegen können, wodurch die Herausziehtragfähigkeit der eingeschraubten Schraube weiter erhöht wird.

Besonders zweckmäßig sind bei einer Schraube gemäß der Erfindung, nämlich einer Holzschraube, die Erhebungen parallel zur Längsachsenrichtung am Gewindekern ausgerichtet.

In einer weiteren alternativen Ausführung der Erfindung sind bei einer Schraube, insbesondere einer Holzschraube, die Erhebungen jeweils in einem Winkel schräg zur Längsachsenrichtung am Gewindekern ausgerichtet. In dieser Ausführung kommt es durch die schräg zur Längsachsenrichtung der Schrauben angeordneten Erhebungen zu einer besonders formschlüssigen Verbindung der eingeschraubten Schraube mit dem diese umgebenden Bauteilmaterial.

Bei der erfindungsgemäßen Schraube sind die ersten Erhebungen mit jeweils einer Flanke zweier benachbarter Gewindeumdrehungen verbunden. In dieser Ausführung sind die ersten Erhebungen, die mit den Flanken zweier benachbarter Gewindeumdrehungen verbunden sind, besonders robust und weitestgehend vor Beschädigungen beim Einschrauben geschützt angeordnet.

Bei der erfindungsgemäßen Schraube sind die zweiten Erhebungen an den Gewindeumdrehungen des Gewindeabschnitts angeformt, wobei die zumindest eine Erhebung beiderseits der Gewindeumdrehungen Vorsprünge bildet. Durch die Vorsprünge, welche beiderseits der Gewindeumdrehungen vorstehen, wird eine besonders formschlüssige Verbindung der eingeschraubten Schraube mit dem Bauteilmaterial erzielt.

Die Erhebungen sind in einer geraden Reihe an der Mantelfläche des Gewindekerns angeordnet. Die Erhebungen sind dabei in einem Umfangsabschnitt bzw. einem Umfangssegment an der Mantelfläche des Gewindekerns angeordnet. Vorteilhaft können in dieser Ausführung die Erhebungen, die innerhalb eines einzigen Umfangsabschnitts an der Mantelfläche des Gewindekerns angeordnet sind, besonders wirtschaftlich gefertigt werden.

Bei der erfindungsgemäßen Schraube sind die Erhebungen in zumindest zwei geraden Reihen an der Mantelfläche des Gewindekerns in Umfangsrichtung abwechselnd zueinander versetzt angeordnet, wobei erste Erhebungen in einer ersten Reihe in einem ersten Umfangsabschnitt sowie zweite Erhebungen in Längsachsenrichtung jeweils alternierend zu den ersten Erhebungen in einer zweiten Reihe in einem zweiten Umfangsabschnitt der Mantelfläche des Gewindekerns angeordnet sind. Vorteilhaft sind dabei die Erhebungen in zumindest zwei verschiedenen Umfangsabschnitten des Gewindekerns in Umfangsrichtung abwechselnd zueinander versetzt angeordnet. Die ersten Erhebungen sind in einem ersten Umfangsabschnitt und die zweiten Erhebungen sind in Längsachsenrichtung jeweils alternierend zu den ersten Erhebungen in einem zweiten Umfangsabschnitt angeordnet.

Die geraden Reihen, an denen Erhebungen entlang angeordnet sind, können dabei in beliebigen Abständen von Umfangsabschnitten zueinander angeordnet sein. Beispielsweise können ein erster Umfangsabschnitt umfassend eine erste Reihe von Erhebungen sowie ein zweiter Umfangsabschnitt umfassend eine zweite Reihe von Erhebungen sowie allfällige weitere Umfangsabschnitte mit weiteren Reihen von Erhebungen jeweils um eine Vierteldrehung oder um eine Dritteldrehung versetzt in einem gleichmäßigen Teilungsverhältnis entlang des Umfangs der Mantelfläche des Gewindekerns angeordnet sein. Ebenso ist es im Rahmen der Erfindung vorgesehen, beliebige andere Abstände in Umfangsrichtung entlang der Mantelfläche des Gewindekerns zwischen zumindest zwei Umfangsabschnitten mit geraden Reihen an Erhebungen zu realisieren.

Bei der erfindungsgemäßen Schraube sind die ersten Erhebungen und die zweiten Erhebungen in zwei an der Mantelfläche des Gewindekerns diametral gegenüberliegenden Umfangsabschnitten abwechselnd zueinander versetzt angeordnet. Diese Anordnung bietet den Vorteil, dass aufgrund der an der Mantelfläche des Gewindekerns diametral gegenüberliegenden Umfangsabschnitte mit Erhebungen eine besonders gleichmäßige Bewegung der Schraube beim Einschrauben in einen Holzbauteil erzielt wird. Die Schraube wird durch die diametral entgegengesetzten Erhebungen beim Einschrauben in eine dynamische Schwingung versetzt, weshalb das erforderliche Einschraubdrehmoment vorteilhaft weiter reduziert werden kann.

Bei der erfindungsgemäßen Schraube sind die ersten Erhebungen in einem ersten Umfangsabschnitt mit jeweils einer Flanke zweier benachbarter Gewindeumdrehungen verbunden und die zweiten Erhebungen in einem zweiten Umfangsabschnitt jeweils an den Gewindeumdrehungen des Gewindeabschnitts angeformt, wobei die zweiten Erhebungen jeweils beiderseits der Gewindeumdrehungen Vorsprünge bilden.

In einer weiteren bevorzugten Ausführung ist in Längsachsenrichtung je Längsachsenabschnitt jeweils nur eine Erhebung an der Mantelfläche des Gewindekerns angeordnet. In dieser Ausführung ist von Vorteil, dass das Material des Bauteils beim Einschrauben von der einzigen Erhebung je Längsachsenabschnitt der Schraube besonders schonend nach außen gedrückt wird und somit eine unerwünschte Rissbildung im Bauteilmaterial während des Einschraubens möglichst vermieden werden kann.

Besonders vorteilhaft bildet bei einer erfindungsgemäßen Schraube, nämlich einer Holzschraube, eine Außenfläche der Erhebungen eine kurvenförmige Kontur. In dieser vorteilhaften Ausführung weisen die Erhebungen an der Mantelfläche des Gewindekerns eine kurvenförmige Außenfläche bzw. eine abgerundete, kurvenförmige Kontur auf. Damit wird ein Einschneiden der Erhebungen im Bauteilmaterial während des Einschraubens der Schraube verhindert. Die Erhebungen drücken aufgrund ihrer gerundeten Außenflächen während des Einschraubens nach außen gegen den elastischen Holzbauteil, ohne dass es zu einem zusätzlichen Einreißen bzw. Einschneiden des Bauteilmaterials innerhalb des Einschraubloches kommt. In eingeschraubter, statischer Lage der Schraube kann der elastische Holzbauteil somit wieder möglichst seine ursprüngliche Form annehmen und die Erhebungen werden somit vom Holzbauteil fest umschlossen, wodurch die Haltekraft des Gewindes im Bauteil weiter ansteigt.

Besonders zweckmäßig ist bei einer Schraube gemäß der Erfindung, nämlich bei einer Holzschraube, eine radiale Dicke der Erhebungen gleich oder kleiner als eine radiale Höhe der Gewindeumdrehungen, wobei die radiale Dicke der Erhebungen vorzugsweise 2/3 der radialen Höhe der Gewindeumdrehungen beträgt. In dieser Ausführung überragen die an der Mantelfläche des Gewindekerns angebrachten Erhebungen die Gewindeumdrehungen bzw. Gewindegänge nicht, sondern weisen einen maximalen Radius der Erhebungen auf, der maximal gleich groß ist wie der Radius der Gewindegänge. Somit wird vorteilhaft der Durchmesser des Einschraubloches im Bauteilmaterial vom Außendurchmesser der Gewindegänge bestimmt und die Erhebungen überragen die Flanken der Gewindegänge bzw. Gewindeumdrehungen nicht. Besonders bevorzugt beträgt die maximale radiale Dicke der Erhebungen 2/3 der radialen Höhe der Gewindeumdrehungen.

Besonders vorteilhaft ist die radiale Dicke der Erhebungen größer als ein Radius des Schraubenschafts. Damit ist vorteilhaft der Radius der Erhebungen größer als der Radius des glatten Schraubenschafts, wodurch beim Einschrauben der Schraube in einen Bauteil eine unerwünschte Reibung des Schraubenschafts gegenüber dem im Schraubloch angrenzenden Bauteilmaterial weitestgehend ausgeschlossen wird.

In einer Weiterbildung der Erfindung ist bei einer Schraube, nämlich bei einer Holzschraube, in den Bereich des Spitzekonus und des darauf befindlichen Gewindeabschnitts eine Nut ausgeschnitten. In dieser Ausführung bildet die Nut im Bereich des Spitzekonus eine Schneide und einen Spanraum, wodurch das Einschrauben der Schraube in einem Bauteil erleichtert wird.

In einer Weiterbildung der Erfindung erstreckt sich bei einer Schraube, nämlich bei einer Holzschraube der Gewindeabschnitt in einer Gewindeabschnittslänge vom Spitzekonus bis zum Schraubenkopf. In dieser Ausführung weist eine erfindungsgemäße Schraube ein Vollgewinde auf, welches vom Spitzekonus bis zum Schraubenkopf reicht. Somit können vorteilhaft entlang der gesamten Gewindeabschnittslänge des Vollgewindes Erhebungen am Gewindekern angeordnet werden, wodurch die Haltekraft der eingeschraubten Schraube in einem Bauteil weiter erhöht wird. Derartige erfindungsgemäße Schrauben mit einem Vollgewinde können bevorzugt als Armierungsschrauben im konstruktiven Holzbau eingesetzt werden.

Zusammenfassend bieten erfindungsgemäße Schrauben, nämlich erfindungsgemäße Holzschrauben, neben den vorgenannten Vorteilen noch die weiteren Verbesserungen gegenüber den am Markt derzeit befindlichen Produkten: Die Produktionskosten der erfindungsgemäßen Schrauben sind niedriger, da hier weder ein Reibeteil noch besondere Spitzenausformungen zwingend notwendig sind. Aufgrund des exzellenten Einschraubverhaltens kann bei einer erfindungsgemäßen Schraube auf eine Gleitbeschichtung verzichtet werden, weshalb somit Kosten gespart und durch den Wegfall von Beschichtungen die Umwelt geschont wird. Bei Verarbeitung der erfindungsgemäßen Schrauben in Laub- und Harthölzern kann im Bedarfsfall ein Vorbohren entfallen. Somit spart man Zeit und Kosten. Im Besonderen ist herauszustreichen, dass beispielsweise ein Einsatz der erfindungsgemäßen Schrauben in einer Ausführung als Vollgewindeschrauben für sogenannte Armierungsverschraubungen zu besonders günstigen Ergebnissen in Bezug auf die Einfachheit der Handhabung sowie auf die wirtschaftliche Lösung von vorgegebenen Armierungsaufgaben führen kann.

Nachfolgend werden in einer Tabelle eigene Versuchsdaten zu Einschraubdrehmomenten festgehalten, die mit einer erfindungsgemäßen Holzschraube (diese ist in der Tabelle mit der Abkürzung "DS" bezeichnet) sowie im Vergleich dazu mit sechs unterschiedlichen, jeweils handelsüblichen Schrauben (diese sind in der Tabelle mit den Abkürzungen "VGS 1" bis "VGS 6" bezeichnet) ermittelt wurden. Für die Einschraubversuche wurden jeweils Holzschrauben mit einem nominalen Durchmesser (DN) von 8 mm sowie mit einer Schraubenlänge von 240 mm verwendet. Die unterschiedlichen Holzschrauben wurden dazu in 10 Versuchsanordnungen unter jeweils identischen Versuchsbedingungen - wobei bei jedem Versuch die Holzschrauben jeweils in denselben Holzbauteil eingeschraubt wurden - miteinander verglichen. Für die Versuche wurde jeweils ein und dasselbe elektrische Schraubwerkzeug mit integrierter Drehmomenterfassung verwendet. Die in der nachfolgenden Tabelle angegebenen Versuchswerte der Einschraubdrehmomente sind jeweils als Drehmoment in Newtonmeter (Nm) angegeben.

**Tabelle: Vergleich der Einschraubdrehmomente zwischen einer erfindungsgemäßen Schraube (Abkürzung: "DS") und sechs unterschiedlichen herkömmlichen Schrauben (Abkürzungen: "VGS 1" bis "VGS 6"): - Daten der Versuche 1 bis 10, Einschraubdrehmomente in Newtonmeter (Nm); - Charakteristische Werte lt. DIN EN 14358, Angabe in (Nm); - Reduktion des mittleren Einschraubdrehmoments der erfindungsgemäßen Schraube "DS" im Vergleich zu den herkömmlichen Schrauben (Angabe in %).**

| Schrauben | DS | VGS 1 | VGS 2 | VGS 3 | VGS 4 | VGS 5 | VGS 6 |
|---|---|---|---|---|---|---|---|
| Versuch 1 (Nm) | 3,12 | 8,78 | 7,54 | 6,12 | 5,2 | 5,01 | 4,82 |
| Versuch 2 (Nm) | 3,02 | 6,62 | 6,02 | 5,04 | 4,82 | 4,83 | 4,35 |
| Versuch 3 (Nm) | 3,29 | 6,39 | 5,33 | 5,01 | 4,75 | 7,04 | 4,74 |
| Versuch 4 (Nm) | 3,91 | 7,19 | 6,38 | 4,97 | 5,21 | 7,24 | 4,73 |
| Versuch 5 (Nm) | 2,89 | 11,77 | 8,42 | 4,25 | 5,48 | 4,56 | 5,53 |
| Versuch 6 (Nm) | 4,01 | 5,34 | 5,34 | 3,2 | 3,99 | 5,71 | 4,54 |
| Versuch 7 (Nm) | 2,91 | 5,88 | 6,05 | 4,97 | 4,67 | 6,58 | 3,26 |
| Versuch 8 (Nm) | 2,78 | 5,95 | 3,8 | 4,08 | 4,51 | 6,42 | 4,89 |
| Versuch 9 (Nm) | 3,64 | 4,34 | 5,11 | 5,11 | 4,61 | 4,7 | 3,55 |
| Versuch 10 (Nm) | 3,11 | 3,35 | 4,88 | 6,66 | 3,61 | 4,38 | 3,16 |
| Charakteristischer Wert lt. DIN EN 14358 (Nm) | 2,47 | 2,988 | 3,583 | 3,148 | 3,57 | 3,71 | 2,88 |
| Einschraubdrehmoment von Schraube DS (%) | - | 21 | 45 | 27 | 45 | 50 | 17 |

Wie im Holzbau üblich werden für Vergleichsversuche sogenannte charakteristische Werte nach DIN EN 14358:2006 bestimmt. Demnach muss bei der Auswertung von Versuchsergebnissen zwingend eine logarithmische Normalverteilung zu Grunde gelegt werden. Vereinfacht dargestellt werden dazu die jeweiligen charakteristischen Werte durch Transformierung der Versuchsdaten mit dem natürlichen Logarithmus, durch anschließende Bildung eines Mittelwerts und einer Standardabweichung für die logarithmierten Werte sowie nachfolgender Faktorenbestimmung anhand von tabellierten Faktoren ermittelt. Die ermittelten charakteristischen Werte lt. DIN EN 14358 sind je Schraube ebenfalls der Tabelle zu entnehmen.

Zusammengefasst zeigte sich bei den in der Tabelle dokumentierten Versuchen, dass zum Einschrauben einer erfindungsgemäßen Schraube (Abkürzung "DS") - im Vergleich mit herkömmlichen Schrauben - vorteilhaft ein bis zu 50% geringeres Einschraubdrehmoment erforderlich ist.

Weitere Einzelheiten, Merkmale und Vorteile von Ausführungsformen der Erfindung ergeben sich aus der nachfolgenden Erläuterung von in den Zeichnungen schematisch dargestellten Ausführungsbeispielen. In den Zeichnungen zeigen:
- Fig. 1 ein Ausführungsbeispiel einer Schraube mit einem Teilgewinde in einer Seitenansicht;
- Fig. 2 ein weiteres Ausführungsbeispiel einer Schraube mit einem Teilgewinde in einer isometrischen Ansicht schräg von der Seite;
- Fig. 3 ein weiteres Ausführungsbeispiel einer Schraube mit einem Teilgewinde in einer Seitenansicht;
- Fig. 4 ein weiteres Ausführungsbeispiel einer Schraube mit einem Teilgewinde in einer Seitenansicht;
- Fig. 5 ein weiteres Ausführungsbeispiel einer Schraube mit einem Teilgewinde in einer Seitenansicht;
- Fig. 6 ein erstes erfindungsgemäßes Ausführungsbeispiel einer Schraube mit einem Teilgewinde in einer Seitenansicht;
- Fig. 7 die in Fig. 6 dargestellte Schraube in einer schematischen Schnittansicht in Längsachsenrichtung gemäß der in Fig. 6 eingezeichneten Schnittlinie 7-7;
- Fig. 8 in einer perspektivischen Ansicht schräg von der Seite ein weiteres Ausführungsbeispiel einer Schraube mit einem Teilgewinde;
- Fig. 9 eine Schnittansicht von der Seite der in Fig. 6 gezeigten Schraube in eingeschraubter Lage in einem Bauteil;
- Fig. 10 eine planare Ansicht von der Seite der in Fig. 3 gezeigten Schraube in eingeschraubter Lage in einem Bauteil;
- Fig. 11 ein weiteres Ausführungsbeispiel einer Schraube mit zwei Gewindeabschnitten in einer Seitenansicht in eingeschraubter Lage in einem Bauteil;
- Fig. 12 ein zweites erfindungsgemäßes Ausführungsbeispiel einer Schraube mit einem Vollgewinde in einer Seitenansicht;
- Fig. 13 ein drittes erfindungsgemäßes Ausführungsbeispiel einer Schraube mit einem Teilgewinde in einer Seitenansicht;
- Fig. 14 ein weiteres Ausführungsbeispiel einer Schraube mit einem Vollgewinde in einer Seitenansicht;
- Fig. 15 ein viertes, erfindungsgemäßes Ausführungsbeispiel einer Schraube mit einem Teilgewinde in einer Seitenansicht

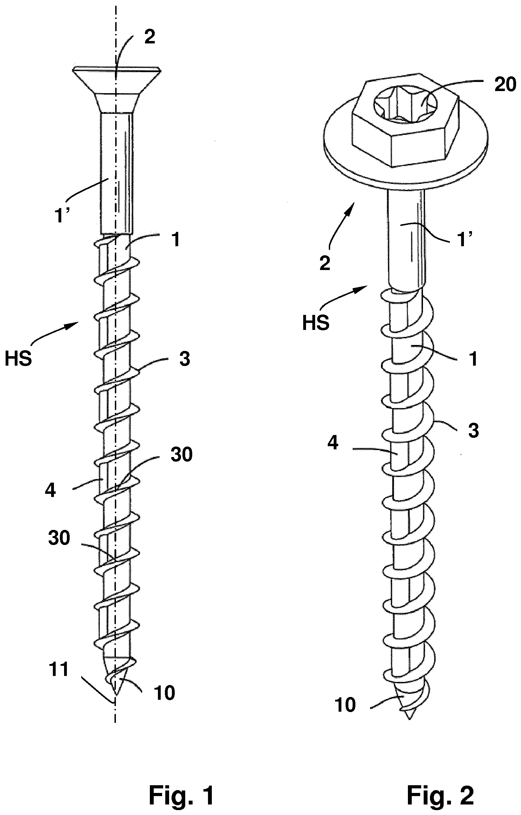

Die Abbildungen Fig. 1 bis 6 zeigen einige Ausführungsformen von Schrauben. Die Schrauben sind jeweils als Holzschrauben HS ausgeführt und umfassen jeweils einen Schraubenschaft 1', einen Schraubenkopf 2, zumindest einen Gewindeabschnitt 3 mit einem Gewindekern 1 sowie mehrere Erhebungen 4 bzw. 4', 4A und/oder 4B.

Der Schraubenschaft 1' weist jeweils einen im Wesentlichen zylinderförmigen Schaftkörper mit einer Längsachse 11 auf. An einem Ende des Schraubenschafts 1' ist ein Spitzekonus 10 ausgebildet und an dem anderen, gegenüberliegenden Ende des Schraubenschafts 1' ist ein Schraubenkopf 2 ausgebildet. Der Gewindeabschnitt 3 erstreckt sich ausgehend vom Spitzekonus 10 entlang in Richtung zum gegenüberliegenden anderen Ende des Schraubenschafts 1', an dem der Schraubenkopf 2 angeordnet ist, derart, dass mehrere aufeinanderfolgende Gewindeumdrehungen 30 an einer Mantelfläche des Gewindekerns 1 ausgebildet sind.

An der Stirnseite des Schraubenkopfes 2 ist, wie in Fig. 2 gezeigt wird, ein Mitnahmeprofil 20 ausgebildet. Dieses Mitnahmeprofil 20 kann ein beliebiges, aus dem Stand der Technik an sich bekanntes Profil aufweisen und beispielsweise einen Geradeschlitz, einen Kreuzschlitz, eine polygonale Ausnehmung oder eine sternförmige Ausnehmung umfassen, um ein entsprechendes Werkzeug wie beispielsweise einen Schraubendreher usw. mit einer zum Mitnahmeprofil 20 komplementären Anschlussform bzw. Aufsatzform aufnehmen zu können. Wie in den beiden Abbildungen Fig. 1 und 2 gezeigt kann der Schraubenkopf 2 beliebige unterschiedliche Formen wie beispielsweise eine runde bzw. eine polygonale Form aufweisen. Fig. 1 zeigt dazu eine Holzschraube HS mit einem Schraubenkopf 2 beispielsweise mit einem Innen-Sechskant (Inbus) und Fig. 2 zeigt beispielsweise eine Holzschraube HS mit einem Kombinationsschraubenkopf 2, wobei hier ein Innen-Sechsrund (Torx) sowie ein Außen-Sechskant als zwei unterschiedliche Mitnahmeprofile 20 ausgeführt sind. Dadurch ist jeweils eine Verbindung mit einem entsprechenden manuellen oder elektrischen Werkzeug mittels des Schraubenkopfs 2 selbst bzw. des Mitnahmeprofils 20 herstellbar, um die gezeigten Holzschrauben HS drehen bzw. einschrauben zu können.

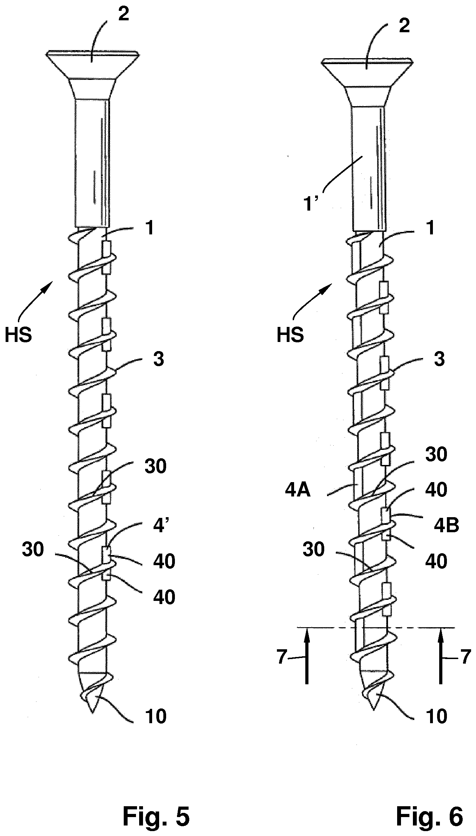

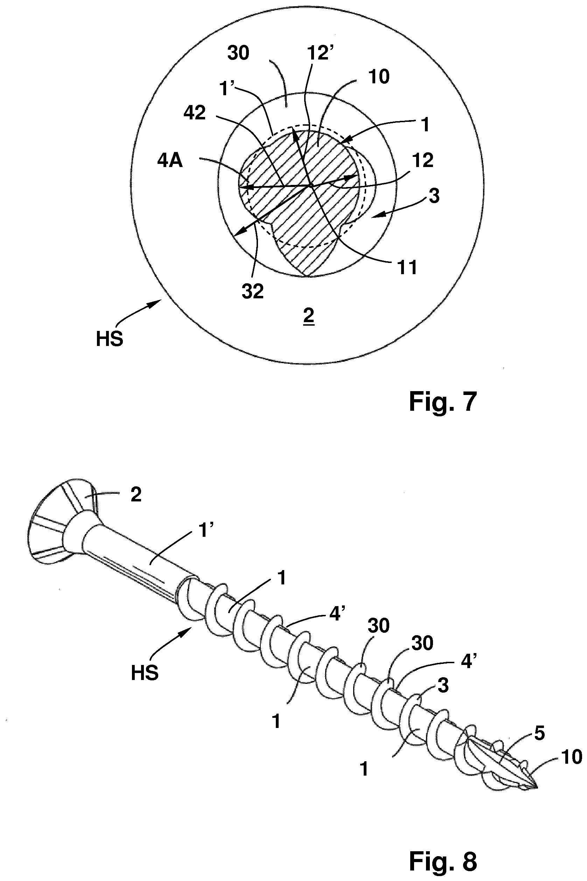

Die in den Abbildungen Fig. 1 bis 6 gezeigten Erhebungen 4 bzw. 4A werden an der Mantelfläche des Gewindekerns 1 angeformt, und verbinden jeweils die Flanken der Gewindeumdrehungen 30. Wie in der Schnittansicht gemäß Fig. 7, welche die in Fig. 6 dargestellte Holzschraube HS in einer schematischen Schnittansicht in Längsachsenrichtung 11 gemäß der in Fig. 6 eingezeichneten Schnittlinie 7-7 zeigt, zu entnehmen ist, beträgt eine radiale Dicke 42 der Erhebungen 4 bzw. 4A hier vorzugsweise rund 2/3 einer radialen Höhe 32 der Gewindeumdrehungen 30. Die Erhebungen 4 bzw. 4A sind hier im Wesentlichen parallel zur Längsachsenrichtung 11 der Holzschraube HS orientiert, wobei Außenflächen der Erhebungen 4 bzw. 4A eine kurvenförmige Fläche bilden bzw. eine kurvenförmige Kontur aufweisen. Wie weiters aus Fig. 7 ersichtlich, ist ein Radius 12 des Gewindekerns 1 im Gewindeabschnitt 3 kleiner als ein Radius 12' des Schraubenschafts 1', der hier in Fig. 7 strichliert eingezeichnet ist. Die radiale Dicke 42 der Erhebungen 4 bzw. 4A ist also größer als der Radius 12' des Schraubenschafts 1'. Somit wird beim Einschrauben einer Teilgewindeschraube in einen Bauteil vermieden, dass durch den im Vergleich zum Kerndurchmesser des Gewindekerns 1 vergrößerten Schaftdurchmesser des Schraubenschafts 1' die Reibung der Holzschraube HS nachteilig vergrößert wird.

Nach den Ausführungsbeispielen gemäß den Abbildungen Fig. 1 bis 4 sind die Erhebungen 4 an der Mantelfläche des Gewindekerns 1 in mindestens einer geraden Reihe sowie in Längsrichtung 11 voneinander beabstandet angeformt. Die beiden Enden jeder Erhebung 4 sind mit jeweils einer Flanke zweier benachbarten Gewindeumdrehungen 30 verbunden. Die aus den Erhebungen 4 bestehende gerade Reihe kann parallel oder im Winkel zu der Mittelachse der Schraubenschafts 1 ausgerichtet werden.

In den beiden Abbildungen Fig. 1 und Fig. 2 sind die Erhebungen 4 jeweils in einer einzigen Reihe bzw. in einem einzigen Umfangsabschnitt an der Mantelfläche des Gewindekerns 1 angeordnet.

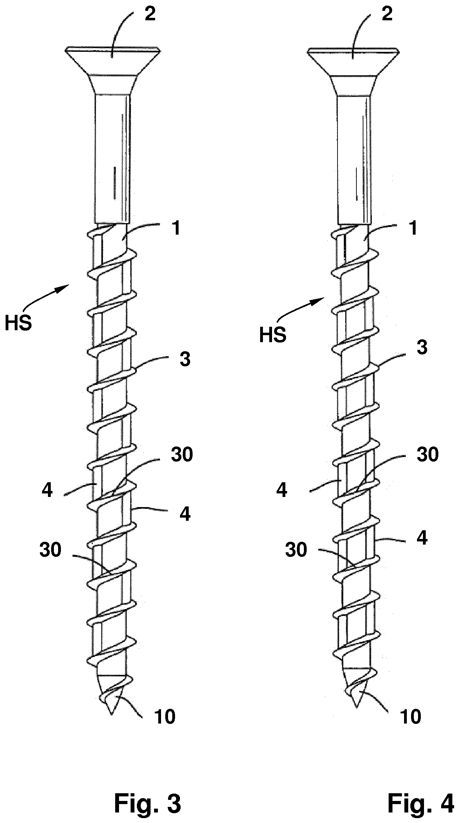

In Fig. 3 sind die Erhebungen 4 an der Mantelfläche des Gewindekerns 1 diametral gegenüberliegend in zwei geraden Reihen bzw. in zwei einander diametral gegenüberliegenden Umfangsabschnitten jeweils alternierend sowie voneinander beabstandet angeordnet. Dabei sind die Erhebungen 4 in den zwei geraden Reihen jeweils um einen Gewindegang bzw. um eine Gewindeumdrehung 30 versetzt abwechselnd zueinander angeordnet.

Alternativ dazu ist es auch möglich, wie in Fig. 4 gezeigt ist, dass die Erhebungen 4 diametral an der Mantelfläche des Gewindekerns 1 in zwei geraden Reihen bzw. in zwei einander diametral gegenüberliegenden Umfangsabschnitten voneinander beabstandet angeordnet sind. Dabei sind die Erhebungen 4 in den zwei geraden Reihen zueinander diametral gegenüberliegend jeweils innerhalb desselben Gewindegangs bzw. derselben Gewindeumdrehung 30 angeordnet.

Gemäß dem in Fig. 5 veranschaulichten Ausführungsbeispiel einer Holzschraube HS sind hier Erhebungen 4' an der Mantelfläche des Gewindekerns 1 in mindestens einer geraden Reihe voneinander beabstandet angeordnet. Dabei sind die Erhebungen 4' in Längsachsenrichtung 11 voneinander beabstandet an den Gewindeumdrehungen 30 des Gewindeabschnitts 3 angeformt. Entsprechend bilden die Erhebungen 4' beiderseits der Gewindeumdrehungen 30 jeweils einen Vorsprung 40 aus. Die Erhebungen 4' sind - wie in Fig. 5 gezeigt - am Gewindekern 1 parallel zur Längsachse 11 der Schraube HS angeordnet. Ebenso können die Erhebungen 4 bzw. 4' am Gewindekern 1 auch in einem Winkel oder in mehreren, unterschiedlichen Winkeln zur Mittelachse 11 ausgerichtet sein.

Gemäß dem in den Abbildungen Fig. 6 und Fig. 7 gezeigten, bevorzugten Ausführungsbeispiel einer erfindungsgemäßen Holzschraube HS können auch mehrere Vorsprünge 4A, 4B in unterschiedlichen Umfangsabschnitten an der Mantelfläche des Gewindekerns 1 angeordnet sein. Dazu werden die Erhebungen hier in erste Erhebungen 4A und zweite Erhebungen 4B unterteilt. Die ersten Erhebungen 4A sind an der Mantelfläche des Gewindekerns 1 in einer geraden Reihe in Längsrichtung 11 voneinander beabstandet ausgebildet. Die beiden Enden jeder der ersten Erhebungen 4A sind mit jeweils einer Flanke zweier benachbarter Gewindeumdrehungen 30 verbunden. Die zweiten Erhebungen 4B sind an der Mantelfläche des Gewindekerns 1 in einer anderen geraden Reihe ebenfalls in Längsachsenrichtung 11 voneinander beabstandet ausgebildet. Jede der zweiten Erhebungen 4B ist an einer der Gewindeumdrehungen 30 des Gewindeabschnitts 3 angeformt und bildet entsprechend beiderseits der Gewindeumdrehungen 30 jeweils einen Vorsprung 40. Die geraden Reihen der Erhebungen 4A bzw. 4B können - wie in Fig. 6 gezeigt - am Gewindekern 1 parallel zur Mittelachse bzw. Längsachse 11 der Schraube ausgerichtet sein. Ebenso ist es im Rahmen der Erfindung möglich, dass die Erhebungen 4A und/oder die Erhebungen 4B in einem Winkel oder aber in unterschiedlichen Winkeln in Bezug zur Längsachsenrichtung 11 an der Mantelfläche des Gewindekerns 1 angeordnet sind.

Fig. 8 zeigt ein weiteres Ausführungsbeispiel einer Holzschraube HS, wobei hier im Bereich des Spitzekonus 10 und des am Spitzekonus 10 befindlichen Gewindeabschnitts 3 eine Nut 5 ausgeschnitten bzw. eingefräst ist. Die Nut 5 bildet eine Schneide und einen Spanraum zum Erleichtern des Einschraubens der Holzschraube HS in einen hier nicht dargestellten Bauteil.

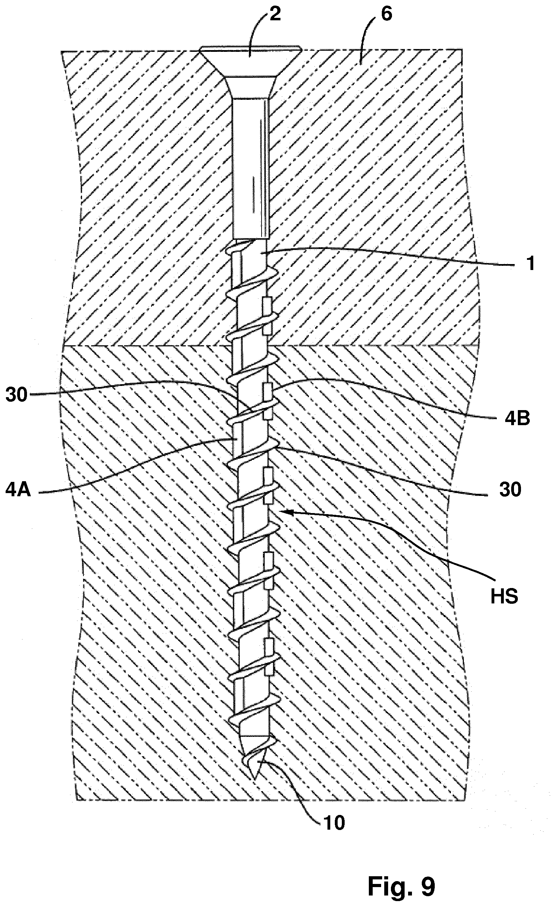

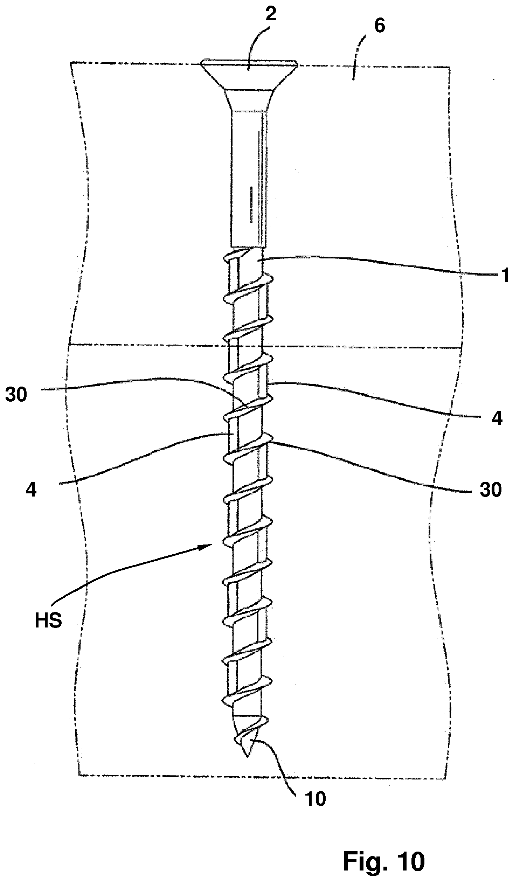

Die vorgenannten Weiterbildungen der Holzschraube HS ermöglichen es, dass, wie in Fig. 9 und 10 gezeigt, wenn die Holzschraube HS in einen Bauteil 6 wie einen Holzbauteil eingeschraubt und damit in diesem Bauteil 6 eingesenkt ist, das Innere des Materials des Bauteils 6 sowohl vom Gewindeabschnitt 3 bzw. vom Gewindekern 1, als auch von den über die Mantelfläche des Gewindekerns 1 vorstehenden Erhebungen 4 angedrückt wird. Dadurch wird eine besonders vorteilhafte Sicherungsfunktion gegen Herausdrehen der Schraube hergestellt, nachdem die Schraube in den Bauteil 6 eingeschraubt ist. Aufgrund der Sicherungsfunktion der Erhebungen 4, nämlich der ersten Erhebungen 4A und der zweiten Erhebungen 4B, an der Mantelfläche des Gewindekerns 1 weist die Holzschraube HS in dem Bauteil 6 eine besonders hohe Herausziehtragfähigkeit auf und wird auch durch Einwirkung von äußeren Kräften auf den Bauteil 6 nicht leicht von selbst gelockert.

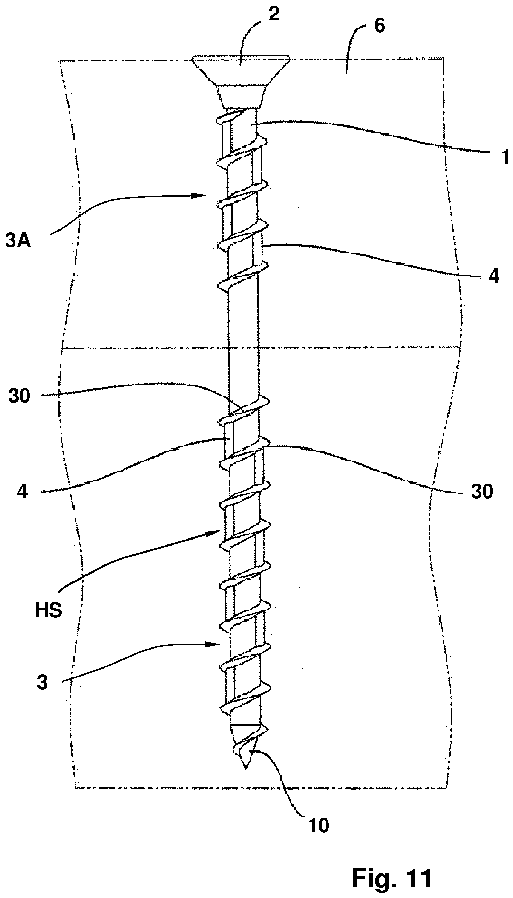

Wie in Fig. 11 dargestellt weist hier eine Holzschraube HS neben dem Gewindeabschnitt 3 mit einem Gewindekern 1 auch einen weiteren Gewindeabschnitt 3A auf, der vom Gewindeabschnitt 3 beabstandet am Schraubenschaft angeordnet ist. Auch zwischen den Gewindeumdrehungen 30 des Gewindeabschnitts 3A können Erhebungen 4 an der Mantelfläche des Gewindekerns 1 angeordnet werden.

Weiters ist es im Rahmen der Erfindung auch möglich, eine hier nicht explizit dargestellte Holzschraube bereitzustellen, die zusätzlich zu einem ersten Gewindeabschnitt 3, welcher mehrere Erhebungen 4 aufweist, zumindest einen weiteren Gewindeabschnitt 3A umfasst, in welchem weiteren Gewindeabschnitt keine Erhebungen 4 zwischen den Gewindeumdrehungen 30 vorgesehen sind.

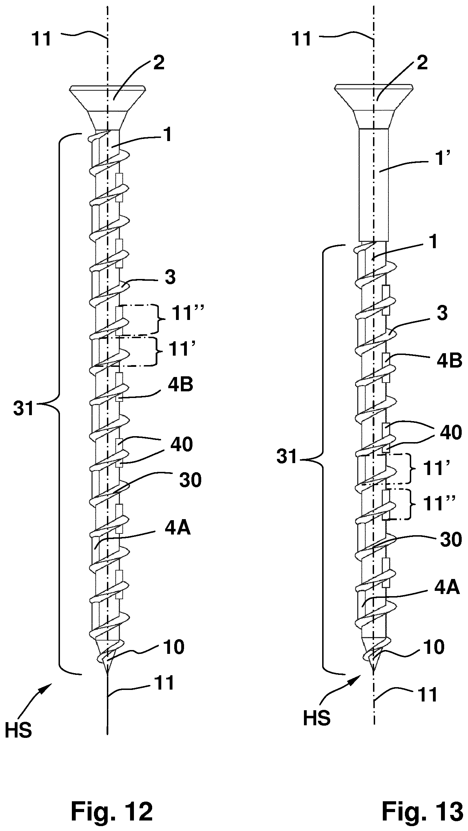

Die Abbildungen Fig. 12 und Fig. 13 zeigen jeweils erfindungsgemäße Holzschrauben HS, wobei die in Fig. 12 gezeigte Ausführung ein Vollgewinde mit einem Gewindeabschnitt 3 mit Gewindeumdrehungen 30 entlang einer Gewindeabschnittslänge 31 umfasst, welcher Gewindeabschnitt 3 vom Spitzekonus 10 bis zum Schraubenkopf 2 reicht. Der Gewindekern 1 des durchgehenden Gewindeabschnitts 3 ist hier der Schraubenschaft der Vollgewindeschraube.

Im Unterschied dazu ist in Fig. 13 eine Holzschraube HS abgebildet, welches sich gegenüber der in Fig. 12 gezeigten Ausführung im Wesentlichen nur durch ein Teilgewinde, also einen Gewindeabschnitt 3 mit einer verkürzten Gewindeabschnittslänge 31, unterscheidet. Die Gewindeabschnittslänge 31 reicht hier ausgehend vom Spitzekonus 10 in Längsachsenrichtung 11 etwa bis 80% der Länge des Schraubenkörpers, wobei ein glatter Abschnitt des Schraubenschafts 1' bis zum Schraubenkopf 2 hin ohne Gewinde verbleibt. In beiden Ausführungen der erfindungsgemäßen Holzschraube HS gemäß Fig. 12 sowie gemäß Fig. 13 sind die Erhebungen 4A sowie 4B jeweils parallel zur Längsachsenrichtung 11 an der Außenseite der Mantelfläche des Gewindekerns 1 im Bereich des Gewindeabschnitts 3 bzw. entlang der jeweiligen Gewindeabschnittslänge 31 angeordnet.

Die Erhebungen 4A, 4B sind dazu in zumindest zwei Umfangsabschnitten des Gewindekerns 1 in Umfangsrichtung abwechselnd zueinander versetzt angeordnet, wobei die ersten Erhebungen 4A in einem ersten Umfangsabschnitt sowie die zweiten Erhebungen 4B in Längsachsenrichtung 11 jeweils alternierend zu den ersten Erhebungen 4A in einem zweiten Umfangsabschnitt angeordnet sind. Die beiden Umfangsabschnitte liegen an der Mantelfläche des Gewindekerns 1 diametral gegenüber. Die ersten Erhebungen 4A in dem ersten Umfangsabschnitt sind mit jeweils einer Flanke zweier benachbarter Gewindeumdrehungen 30 verbunden und die zweiten Erhebungen 4B im zweiten Umfangsabschnitt sind jeweils an den Gewindeumdrehungen 30 des Gewindeabschnitts 3 angeformt, wobei die zweiten Erhebungen 4B jeweils beiderseits der Gewindeumdrehungen 30 Vorsprünge 40 bilden.

Wie in den Abbildungen Fig. 12 bzw. Fig. 13 weiters ersichtlich ist bei den hier gezeigten Holzschrauben HS in Längsachsenrichtung 11 je Längsachsenabschnitt 11' bzw. 11" jeweils nur eine Erhebung 4A oder 4B an der Mantelfläche des Gewindekerns 1 angeordnet. Die Außenflächen der Erhebungen 4A, 4B weist jeweils eine kurvenförmige Fläche bzw. eine kurvenförmige Kontur auf. Die radiale Dicke 42 der Erhebungen 4A, 4B beträgt hier vorzugsweise 2/3 bzw. rund 66% der radialen Höhe 32 der Gewindeumdrehungen 30.

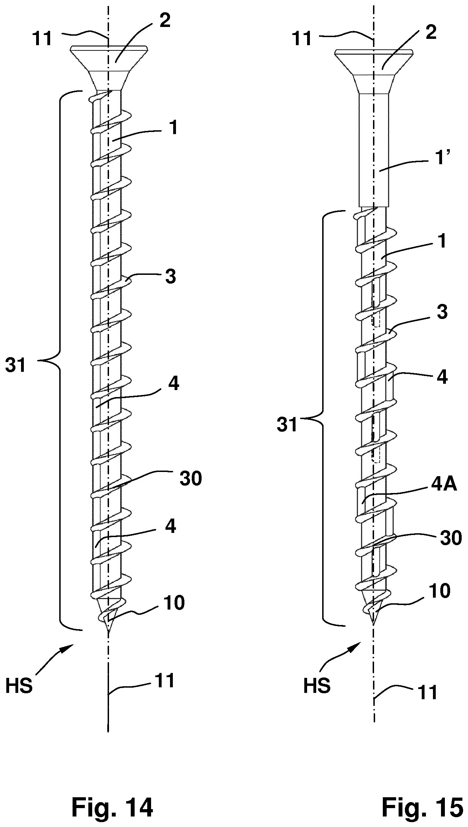

Ebenso ist bei der in Fig. 14 gezeigten Ausführung einer Holzschraube HS mit einem Vollgewinde in Längsachsenrichtung 11 je Längsachsenabschnitt jeweils nur eine Erhebung 4 an der Mantelfläche des Gewindekerns 1 angeordnet. In dieser Ausführung sind die Erhebungen 4 jeweils parallel zur Längsachsenrichtung 11 in einer geraden Reihe an der Mantelfläche des Gewindekerns 1 angeordnet. Die Erhebungen 4 verbinden dabei jeweils die Flanken zweier benachbarter Gewindeumdrehungen 30 bzw. Gewindesteigungen 30.

Alternativ zu den in Fig. 12 bzw. Fig. 13 dargestellten Ausführungen ist es im Rahmen der Erfindung auch möglich, Holzschrauben bereitzustellen, bei denen im Längsachsenrichtung 11 direkt benachbarte Erhebungen 4 bzw. 4A in Umfangsabschnitten angeordnet sind, welche Umfangsabschnitte beispielsweise jeweils um eine Vierteldrehung an der Mantelfläche des Gewindekerns 1 zueinander versetzt sind. Diese Ausführung ist beispielsweise in Fig. 15 anhand einer Holzschraube HS mit einem Teilgewinde veranschaulicht.

### Liste der Positionszeichen:

- HS: Holzschraube
- 1: Gewindekern
- 1': Schraubenschaft
- 10: Spitzekonus
- 11: Längsachse der Schraube
- 11': Längsachsenabschnitt (bzw. 11")
- 12: Radius des Gewindekerns
- 12': Radius des Schraubenschafts
- 2: Schraubenkopf
- 20: Mitnahmeprofil
- 3: Gewindeabschnitt
- 3A: Gewindeabschnitt
- 30: Gewindeumdrehung bzw. Gewindesteigung
- 31: Länge des Gewindeabschnitts
- 32: Radius bzw. radiale Höhe der Gewindeumdrehung
- 4: Erhebung
- 4': Erhebung
- 4A: erste Erhebung
- 4B: zweite Erhebung
- 40: Vorsprung
- 42: Radius bzw. radiale Dicke der Erhebung
- 5: Nut
- 6: Bauteil

## Patentansprüche

1. Holzschraube (HS), umfassend einen zylinderförmigen Schraubenschaft (1'), an dessen einem Ende ein Spitzekonus (10) ausgebildet ist, einen Schraubenkopf (2), der an dem anderen Ende des Schraubenschafts (1') ausgebildet ist, sowie zumindest einen Gewindeabschnitt (3) mit einem Gewindekern (1), welcher Gewindeabschnitt (3) sich vom Spitzekonus (10) in Längsachsenrichtung (11) entlang in Richtung zum Schraubenkopf (2) erstreckt, wobei an dem zumindest einen Gewindeabschnitt (3) mehrere aufeinanderfolgende Gewindeumdrehungen (30) an einer Mantelfläche des Gewindekerns (1) ausgebildet sind, wobei im Bereich des zumindest einen Gewindeabschnitts (3) außenseitig an der Mantelfläche des Gewindekerns (1) mehrere Erhebungen (4A, 4B) angeordnet sind, wobei die Erhebungen (4A, 4B) erste in Längsachsenrichtung (11) voneinander beabstandete Erhebungen (4A) und zweite in Längsachsenrichtung (11) voneinander beabstandete Erhebungen (4B) umfassen, wobei die ersten Erhebungen (4A) in einer ersten geraden Reihe an der Mantelfläche des Gewindekerns (1) angeordnet sind und die zweiten Erhebungen (4B) in einer zweiten geraden Reihe an der Mantelfläche des Gewindekerns (1) angeordnet sind, wobei die ersten Erhebungen (4A) den zweiten Erhebungen (4B) in Umfangsrichtung diametral gegenüberliegen, wobei die ersten Erhebungen (4A) zwischen benachbarten Gewindeumdrehungen (30) angeordnet und mit jeweils einer Flanke der benachbarten Gewindeumdrehungen (30) verbunden sind, **dadurch gekennzeichnet, dass** in Längsachsenrichtung (11) die ersten Erhebungen (4A) alternierend mit den zweiten Erhebungen (4B) angeordnet sind, wobei die zweiten Erhebungen (4B) jeweils an einer Gewindeumdrehung (30) des Gewindeabschnitts (3, 3A) angeformt sind und beiderseits dieser Gewindeumdrehung (30) Vorsprünge (40) bilden.

2. Schraube nach Anspruch 1, **dadurch gekennzeichnet, dass** in Längsachsenrichtung (11) in einem jeden Längsachsenabschnitt (11', 11") jeweils nur eine Erhebung (4A, 4B) an der Mantelfläche des Gewindekerns (1) angeordnet ist.

3. Schraube nach Anspruch 1 oder 2, **dadurch gekennzeichnet, dass** die ersten Erhebungen (4A) an jeder zweiten Gewindeumdrehung zwischen benachbarten Gewindeumdrehungen (30) angeordnet sind und dass die zweiten Erhebungen (4B) an jeder zweiten Gewindeumdrehung (30) angeformt sind.

4. Schraube nach einem der vorhergehenden Ansprüchen, **dadurch gekennzeichnet, dass** die Erhebungen (4A, 4B) nur in jenem Abschnitt des Gewindekerns (1) angeordnet sind, der einen konstanten Kerndurchmesser aufweist.

5. Schraube nach Anspruch 4, **dadurch gekennzeichnet, dass** die Erhebungen (4A, 4B) im gesamten Abschnitt des Gewindekerns (1) angeordnet sind, der einen konstanten Kerndurchmesser aufweist.

6. Schraube nach einem der Ansprüche 1 bis 5, **dadurch gekennzeichnet, dass** die Erhebungen (4A, 4B) parallel zur Längsachsenrichtung (11) am Gewindekern (1) ausgerichtet sind.

7. Schraube nach einem der Ansprüche 1 bis 5, **dadurch gekennzeichnet, dass** die Erhebungen (4A, 4B) jeweils in einem Winkel schräg zur Längsachsenrichtung (11) am Gewindekern (1) ausgerichtet sind.

8. Schraube nach einem der vorigen Ansprüche, **dadurch gekennzeichnet, dass** eine Außenfläche der Erhebungen (4A, 4B) eine kurvenförmige Kontur bildet.

9. Schraube nach einem der vorigen Ansprüche, **dadurch gekennzeichnet, dass** eine radiale Dicke (42) der Erhebungen (4A, 4B) gleich oder kleiner als eine radiale Höhe (32) der Gewindeumdrehungen (30) ist, wobei die radiale Dicke (42) der Erhebungen (4A, 4B) vorzugsweise 2/3 der radialen Höhe (32) der Gewindeumdrehungen (30) beträgt.

10. Schraube nach einem der vorigen Ansprüche, **dadurch gekennzeichnet, dass** eine radiale Dicke (42) der Erhebungen (4A, 4B) größer als ein Radius (12') des Schraubenschafts (1') ist.

11. Schraube nach einem der vorigen Ansprüche, **dadurch gekennzeichnet, dass** in den Bereich des Spitzekonus (10) und des darauf befindlichen Gewindeabschnitts (3) eine Nut (5) ausgeschnitten ist.

12. Schraube nach einem der vorigen Ansprüche, **dadurch gekennzeichnet, dass** sich der Gewindeabschnitt (3) in einer Gewindeabschnittslänge (31) vom Spitzekonus (10) bis zum Schraubenkopf (2) erstreckt.

## Claims

1. A wood screw (WS) comprising a cylindrical screw shank (1'), at the end of which is formed a tip cone (10), a screw head (2), which is formed at the other end of the screw shank (1'), as well as at least one threaded section (3) having a thread core (1), which threaded section (3) extends from the tip cone (10) along the direction of a longitudinal axis (11) to the screw head (2), wherein at the at least one threaded section (3) multiple successive thread turns (30) are formed on a shell surface of the thread core (1), wherein several elevations (4A, 4B) are arranged on the outside of the shell surface of the thread core (1) in the area of the at least one threaded section (3), wherein the elevations (4A, 4B) comprise first elevations (4A) spaced apart from one another in the direction of longitudinal axis (11) and second elevations (4B) spaced apart from one another in the direction of longitudinal axis (11), wherein the first elevations (4A) are arranged in a first straight line on the shell surface of the thread core (1) and the second elevations (4B) are arranged in a second straight line on the shell surface of the thread core (1), wherein the first elevations (4A) are diametrically opposite to the second elevations (4B) in a circumferential direction, wherein the first elevations (4A) are arranged between adjacent thread turns (30) and are each connected with a respective flank of an adjacent thread turn (30), **characterized in that** the first elevations (4A) are arranged alternatingly with the second elevations (4B) in the direction of the longitudinal axis (11), wherein the second elevations (4B) are each molded onto a thread turn (30) of the threaded section (3, 3A) and form elevations (40) on both sides of said threaded section (30).

2. The screw of claim 1, **characterized in that** in the direction of the longitudinal axis (11) only one elevation (4A, 4B) is arranged in each longitudinal axis section (11', 11") at the shell surface of the thread core (1).

3. The screw of claim 1 or 2, **characterized in that** the first elevations (4A) are arranged at every second thread turn between adjacent thread turns (30) and that the second elevations (4B) are formed to each second thread turn (30).

4. The screw of any one of the preceding claims, **characterized in that** the elevations (4A, 4B) are only arranged in the section of the thread core (1) having a constant core diameter.

5. The screw of claim 4, **characterized in that** the elevations (4A, 4B) are arranged in the entire section of the thread core (1) having a constant core diameter.

6. The screw of any one of the claims 1 to 5, **characterized in that** the elevations (4A, 4B) are arranged on the thread core (1) parallel to the direction of longitudinal axis (11).

7. The screw of any one of the claims 1 to 5, **characterized in that** the elevations (4A, 4B) are arranged on the thread core (1) at an oblique angle to the direction of longitudinal axis (11).

8. The screw of any one of the preceding claims, **characterized in that** an exterior surface of the elevations (4A, 4B) forms a curvilinear contour.

9. The screw of any one of the preceding claims, **characterized in that** a radial thickness (42) of the elevations (4A, 4B) is equal to or smaller than a radial height (32) of the thread turns (30), wherein the radial thickness (42) of the elevations (4A, 4B) is preferably 2/3 of the radial height (32) of the thread turns (30).

10. The screw of any one of the preceding claims, **characterized in that** a radial thickness (42) of the elevations (4A, 4B) is larger than a radius (12') of the screw shank (1').

11. The screw of any one of the preceding claims, **characterized in that** a groove (5) is cut out in the area of the tip cone (10) and the threaded section (3) thereon.

12. The screw of any one of the preceding claims, **characterized in that** threaded section (3) extends over a threaded section length (31) from the tip cone (10) to the screw head (2).

## Revendications

1. Vis à bois (HS), comprenant une tige filetée cylindrique (1'), à une extrémité de laquelle est formé un cône de pointe (10), une tête de vis (2), qui est formée à l'autre extrémité de la tige filetée (1'), ainsi qu'au moins une partie filetée (3) avec un noyau de filet (1), cette partie filetée (3) s'étendant du cône de pointe (10) selon la direction de l'axe longitudinal (11) en direction de la tête de vis (2), dans laquelle plusieurs tours de filet successifs (30) sont formés sur une surface latérale du noyau de filet (1) au niveau au moins de la partie filetée (3), dans laquelle plusieurs protubérances (4A, 4B) sont disposées extérieurement sur la surface latérale du noyau de filet (1) dans la région de ladite au moins une partie filetée (3), dans laquelle les protubérances (4A, 4B) comprennent des premières protubérances (4A) espacées l'une de l'autre dans la direction de l'axe longitudinal (11) et des secondes protubérances (4B) espacées l'une de l'autre dans la direction de l'axe longitudinal (11), dans laquelle les premières protubérances (4A) sont disposées en une première rangée droite sur la surface latérale du noyau de filet (1) et les secondes protubérances (4B) sont disposées en une seconde rangée droite sur la surface latérale du noyau de filet (1), dans laquelle les premières protubérances (4A) sont diamétralement opposées aux secondes protubérances (4B) en direction périphérique, dans laquelle les premières protubérances (4A) sont disposées entre des tours de filet voisins (30) et sont respectivement assemblées à un flanc des tours de filet voisins (30), **caractérisée en ce que** les premières protubérances (4A) sont disposées en alternance avec les secondes protubérances (4B) dans la direction de l'axe longitudinal (11), dans laquelle les secondes protubérances (4B) sont respectivement formées sur un tour de filet (30) de la partie filetée (3, 3A) et forment des saillies (40) de part et d'autre de ce tour de filet (30).

2. Vis selon la revendication 1, **caractérisée en ce que** seule une protubérance (4A, 4B) est disposée sur la surface latérale du noyau de filet (1) respectivement dans chaque partie d'axe longitudinal (11', 11") dans la direction de l'axe longitudinal (11).

3. Vis selon une revendication 1 ou 2, **caractérisée en ce que** les premières protubérances (4A) sont disposées à un tour de filet sur deux entre des tours de filet voisins (30) et **en ce que** les secondes protubérances (4B) sont formées à un tour de filet (30) sur deux.

4. Vis selon l'une quelconque des revendications précédentes, **caractérisée en ce que** les protubérances (4A, 4B) ne sont disposées que dans la partie du noyau de filet (1), qui présente un diamètre de noyau constant.

5. Vis selon la revendication 4, **caractérisée en ce que** les protubérances (4A, 4B) sont disposées dans toute la partie du noyau de filet (1), qui présente un diamètre de noyau constant.

6. Vis selon l'une quelconque des revendications 1 à 5, **caractérisée en ce que** les protubérances (4A, 4B) sont orientées parallèlement à la direction de l'axe longitudinal (11) sur le noyau de filet (1).

7. Vis selon l'une quelconque des revendications 1 à 5, **caractérisée en ce que** les protubérances (4A, 4B) sont orientées sous un angle en oblique par rapport à la direction de l'axe longitudinal (11) sur le noyau de filet (1).

8. Vis selon l'une quelconque des revendications précédentes, **caractérisée en ce qu'**une face extérieure des protubérances (4A, 4B) forme un contour de forme courbe.

9. Vis selon l'une quelconque des revendications précédentes, **caractérisée en ce qu'**une épaisseur radiale (42) des protubérances (4A, 4B) est égale ou inférieure à une hauteur radiale (32) des tours de filet (30), dans laquelle l'épaisseur radiale (42) des protubérances (4A, 4B) vaut de préférence 2/3 de la hauteur radiale (32) des tours de filet (30).

10. Vis selon l'une quelconque des revendications précédentes, **caractérisée en ce qu'**une épaisseur radiale (42) des protubérances (4A, 4B) est supérieure à un rayon (12') de la tige filetée (1').

11. Vis selon l'une quelconque des revendications précédentes, **caractérisée en ce qu'**une rainure (5) est taillée dans la région du cône de pointe (10) et de la partie filetée (3) se trouvant sur celui-ci.

12. Vis selon l'une quelconque des revendications précédentes, **caractérisée en ce que** la partie filetée (3) s'étend dans une longueur de partie filetée (31) du cône de pointe (10) jusqu'à la tête de vis (2).
